# EUROPÄISCHE PATENTSCHRIFT

(11) **EP 4 325 048 B1**
(45) Veröffentlichungstag und Bekanntmachung des Hinweises auf die Patenterteilung: **21.01.2026**
(21) Anmeldenummer: 22190971.6
(22) Anmeldetag: 18.08.2022
(51) Int. Cl.: F03D 17/00

(54) **COMPUTERIMPLEMENTIERTES VERFAHREN UND VORRICHTUNG ZUR JUSTIERUNG VON EINEM BLATTLASTMESSSYSTEM EINES ROTORBLATTS EINER WINDKRAFTANLAGE, WINDKRAFTANLAGE MIT ZUMINDEST EINEM ROTORBLATT MIT EINEM DEHNUNGSSENSOR UND COMPUTERLESBARES SPEICHERMEDIUM**
COMPUTER-IMPLEMENTED METHOD AND APPARATUS FOR ADJUSTING A BLADE LOAD MEASUREMENT SYSTEM OF A WIND TURBINE ROTOR BLADE, WIND TURBINE HAVING AT LEAST ONE ROTOR BLADE WITH A STRAIN SENSOR AND COMPUTER READABLE STORAGE MEDIUM
PROCÉDÉ MIS EN OEUVRE PAR ORDINATEUR ET DISPOSITIF D'AJUSTEMENT D'UN SYSTÈME DE MESURE DE CHARGE DE PALE D'UNE PALE DE ROTOR D'UNE ÉOLIENNE, ÉOLIENNE POURVUE D'AU MOINS UNE PALE DE ROTOR DOTÉ D'UN CAPTEUR DE DÉFORMATION ET SUPPORT DE STOCKAGE LISIBLE PAR ORDINATEUR

(43) Veröffentlichungstag der Anmeldung: 21.02.2024
(73) Patentinhaber: Polytech A/S, 6740 Bramming (DK)
(72) Erfinder: Klein, Christoph, 83278 Traunstein (DE); Peterek, Bastian, 83052 Bruckmühl (DE)
(74) Vertreter: Zacco Denmark A/S

(56) Entgegenhaltungen:
- EP-A1- 2 531 722
- US-A1- 2017 284 376

## Beschreibung

### Technisches Gebiet

Die vorliegende Erfindung betrifft allgemein ein computerimplementiertes Verfahren und eine Vorrichtung zur Justierung von einem Blattlastmesssystem eines Rotorblatts einer Windkraftanlage, eine Windkraftanlage mit zumindest einem Rotorblatt mit einem Dehnungssensor und ein computerlesbares Speichermedium.

### Stand der Technik

Eine Windkraftanlage wandelt Windenergie in elektrische Energie um. Der Wind übt eine Kraft auf zumindest ein Rotorblatt eines Rotors der Windkraftanlage aus, sodass kinetische Energie des Windes in kinetische Rotationsenergie des Rotors umgewandelt wird. Der Rotor treibt einen elektrischen Generator an, der elektrische Energie in ein Elektrizitätsnetz einspeist.

Ein oder mehrere Rotorblätter einer Windkraftanlage werden immer häufiger mit einem oder mehreren Sensoren, z.B. Dehnungssensoren, ausgestattet, der für Steuerungszwecke, insbesondere zur Lastreduktion, und/oder zur Überwachung des Anlagenbetriebs, insbesondere zu Sicherheits- und Instandhaltungszwecken, verwendet wird. Aus den gemessenen Dehnungen der Dehnungssensoren werden auf das Rotorblatt wirkende Kräfte und/oder Momente bestimmt. Um zuverlässige und korrekte Messwerte der Dehnungssensoren und damit korrekte Lastmessergebnisse zu erhalten, müssen die Dehnungssensoren vor ihrer Inbetriebnahme justiert werden, d.h. es wird eine Abweichung eines Lastmesswerts von einem Sollwert (einer Referenz) festgestellt und dokumentiert. Die Justierparameter für die Dehnungssensoren werden dann so eingestellt bzw. abgeglichen, dass eine Messabweichung von einem Sollwert möglichst klein wird bzw. innerhalb einer definierten Spezifikation bzw. Toleranzgrenzen liegt.

Bisher können zur Justierung eines Dehnungssensors zur Blattlastmessung eine Masse des Rotorblattes, eine Anordnung der Sensoren an diesem Rotorblatt, ein aktueller Rotorwinkel der Turbine der Windkraftanlage, eine aktuelle Windgeschwindigkeit und ein aktueller Pitch-Winkel erfasst werden. Dabei stellen der Pitch-Winkel und der aktuelle Rotorwinkel die wichtigsten Eingangsparameter dar. Die aktuelle Windgeschwindigkeit wird für einen Filtermechanismus verwendet, um Messungen herauszufiltern, die bei derart hohen Windgeschwindigkeiten aufgenommen werden, dass Messergebnisse dadurch verfälscht werden können. Hohe Windgeschwindigkeiten führen zu zusätzlich wirkenden Momenten, die eine Justierung ungenau machen, sodass eine Filterung die Justierqualität des Dehnungssensors verbessert.

Zur eigentlichen Justierung wird eine kontrollierte und definierte Fahrt mit dem Rotorblatt ausgeführt, zum Beispiel mehrere Umdrehungen bei geringer Windgeschwindigkeit. Insbesondere wird der Pitch-Winkel des Rotorblatts gezielt angesteuert und unterschiedlich eingestellt. Da Windkraftanlagen mit unterschiedlichen Pitch-Winkeln betrieben werden, ist es erforderlich, Justierungsfahrten bei unterschiedlichen Pitch-Winkeln durchzuführen, um das Verhalten der Dehnungssensoren vollständig abzubilden. Das Rotorblatt wird in definierte Positionen gebracht, in denen bekannte Kräfte bzw. Biegemomente auf das Rotorblatt wirken. Definierte Positionen sind beispielsweise Stellungen des Rotorblatts senkrecht oder parallel zur Erdoberfläche. In welcher Position sich das Rotorblatt befindet, kann durch Messen des aktuellen Rotorwinkels eindeutig bestimmt werden. Das heißt, eine Messung des Rotorwinkels ist für eine Justierung unbedingt erforderlich. In diesen definierten Positionen wirkt beispielsweise lediglich eine Gravitationskraft auf das Rotorblatt. Bei niedrigen Windgeschwindigkeiten sind die aerodynamischen Kräfte, die auf das Rotorblatt wirken, vernachlässigbar. Unter Berücksichtigung der wirkenden Gravitation, der Position der Dehnungssensoren und der Masse des Rotorblatts werden auf das Rotorblatt wirkende Biegemomente und Axialkräfte bestimmt. Gleichzeitig erfassen die Dehnungssensoren basierend auf einem initialen Justierungsparametersatz Kräfte bzw. Biegemomente. Da die wirkenden Kräfte bzw. Momente bekannt sind, werden die von den Dehnungssensoren gemessenen Kräfte bzw. Biegemomente mit den bekannten Kräften bzw. Biegemomenten verglichen und der Justierungsparametersatz für die Dehnungssensoren entsprechend der Abweichung justiert.

Beispielsweise lehrt EP 2 531 722 A1 ein Verfahren zur In-Situ-Justierung von Lastsensoren einer Windturbine. Dabei werden zunächst ein Rotorazimut-Winkel und ein Anstellwinkel des ersten Windturbinenblatts bestimmt. In einem nächsten Schritt werden Lasten in dem ersten Querschnitt des ersten Windturbinenblatts unter Verwendung der ersten Lastsensoren gemessen. Auf der Grundlage des Rotorazimut-Winkels und des Anstellwinkels werden theoretische Lasten, die auf das Blatt wirken, berechnet. Die gemessenen Lasten werden mit den berechneten theoretischen Lasten verglichen und der erste Lastsensor auf der Grundlage des Vergleichs justiert.

### Probleme, die durch die Erfindung gelöst werden

Ein Nachteil des beschriebenen bisherigen Verfahrens zur Justierung eines Dehnungssensors ist, dass der aktuelle Rotorwinkel der Turbine der Windkraftanlage erfasst werden muss. Häufig kann jedoch ein Rotorwinkel nicht eindeutig gemessen werden, da aufgrund messtechnischer Unzulänglichkeiten ein Winkelversatz zwischen dem realen und gemessenen Rotorwinkel auftritt. Treten Störsignale auf oder ist das erfasste Signal des Rotorwinkels unzuverlässig oder ungenau, beeinträchtigt dies die Justierung des Dehnungssensors.

Ausgehend von diesem Stand der Technik ist es eine Aufgabe der vorliegenden Erfindung, die genannten Nachteile zu überwinden. Es bedarf einer Möglichkeit, Dehnungssensoren genau und zuverlässig zu justieren, insbesondere ohne die Messung bzw. Verwendung eines Rotorwinkels.

### Mittel zum Lösen des Problems

Gelöst wird die Aufgabe durch ein computerimplementiertes Verfahren zur Justierung von einem ersten Blattlastmesssystem mit zumindest einem Dehnungssensor an einem ersten Rotorblatt einer Windkraftanlage nach Anspruch 1. Dabei wird eine einfache und genaue Justierung des Blattlastmesssystems ermöglicht und es wird auf eine Messung bzw. Verwendung eines Rotorwinkels bzw. eine Verwendung eines Rotorwinkels im Justierungsverfahren verzichtet. Weiter wird die Aufgabe gelöst durch eine Vorrichtung zur Justierung von einem ersten Blattlastmesssystem mit zumindest einem Dehnungssensor an einem ersten Rotorblatt einer Windkraftanlage nach Anspruch 9, durch eine Windkraftanlage nach Anspruch 13 und durch ein computerlesbares Speichermedium nach Anspruch 14.

Insbesondere wird die Aufgabe durch ein computerimplementiertes Verfahren zur Justierung von einem ersten Blattlastmesssystem mit zumindest einem Dehnungssensor an einem ersten Rotorblatt einer Windkraftanlage gelöst, das folgende Schritte aufweist:
a) Messen einer ersten Beschleunigung mit einem ersten Beschleunigungssensor;
b) Bestimmen eines ersten Referenz-Biegemoments und/oder einer ersten Referenz-Axialkraft basierend auf der ersten gemessenen Beschleunigung;
c) Bestimmen eines ersten gemessenen Biegemoments und/oder einer ersten gemessenen Axialkraft basierend auf Messwerten von dem zumindest einen Dehnungssensor des ersten Blattlastmesssystems und einem zu dem ersten Blattlastmesssystem zugeordneten ersten Justierungsparametersatz mit ersten initialen Justierungsparameterwerten;
d) Bestimmen einer ersten Abweichung des ersten Referenz-Biegemoments und/oder der ersten Referenz-Axialkraft von dem ersten gemessenen Biegemoment und/oder der ersten gemessenen Axialkraft;
e) Anpassen der Justierungsparameterwerte des ersten Justierungsparametersatzes für das erste Blattlastmesssystem derart, dass die erste Abweichung kleiner gleich einem Schwellwert ist.

Ein Gedanke der vorliegenden Erfindung liegt daher darin, ein Blattlastmesssystem zu justieren, ohne einen Rotorwinkel der Windkraftanlage zu verwenden.

Eine Justierung basierend auf Beschleunigungen kann dafür geeignet sein, eine Genauigkeit der Justierung erhöhen.

Unter einem Blattlastmesssystem kann insbesondere ein Dehnungssensorsystem verstanden werden, das zumindest einen Dehnungssensor, insbesondere mehrere Dehnungssensoren, insbesondere zumindest drei, weiter insbesondere zumindest vier Dehnungssensoren umfasst. Der zumindest eine Dehnungssensor kann als ein Dehnungssensor ausgebildet sein, der eine oder mehrere Dehnungen in einer Richtung misst. Der Dehnungssensor kann vorzugsweise so positioniert und ausgerichtet sein, dass er eine oder mehrere Dehnungen in Richtung einer Blattachse misst. Dazu kann der Dehnungssensor in einer beliebigen ersten Ebene des Rotorblattquerschnitts angeordnet sein. Unter einer Ebene eines Rotorblattquerschnitts kann insbesondere eine Ebene durch einen Querschnitt eines Rotorblatts verstanden werden, die orthogonal zu einer Blattachse des Rotorblatts ist. Insbesondere kann der Dehnungssensor dazu ausgebildet sein, mehrere Dehnungen in Richtung der Blattachse zu messen, die für die Bestimmung von Axialkräften und/oder Biegemoment erforderlich sind. Insbesondere, wenn der Dehnungssensor nur eine Dehnung in Richtung der Blattachse messen kann, kann das Blattlastmesssystem mehrere Dehnungssensoren umfassen, die ebenfalls Dehnungen in Richtung der Blattachse erfassen können. Diese Dehnungssensoren können grundsätzlich in beliebigen gleichen oder voneinander verschiedenen Ebenen angeordnet sein. Beispielsweise können die Dehnungssensoren je in einer gemeinsamen Ebene, beispielsweise in der ersten Ebene, des Rotorblattquerschnitts oder in mehreren voneinander beabstandeten Ebenen des Rotorblattquerschnitts angeordnet sein.

Der erste Beschleunigungssensor kann eine in einer rotierenden Rotornabe wirkende erste Beschleunigung erfassen. Der erste Beschleunigungssensor kann beispielsweise ein Beschleunigungssensorsystem sein, das Beschleunigungen in drei orthogonale Raumrichtungen misst. Beispielsweise kann der erste Beschleunigungssensor durch einen 6-DOF-Beschleunigungssensor bereitgestellt werden.

Unter einer ersten gemessenen Beschleunigung kann insbesondere eine Beschleunigung verstanden werden, die Beschleunigungsanteile in mehreren Raumrichtungen, insbesondere in drei, insbesondre orthogonalen, Raumrichtungen, umfasst.

Erfindungsgemäß wird das erste Referenz-Biegemoment und/oder die erste Referenz-Axialkraft basierend auf der ersten gemessenen Beschleunigung bestimmt. Die Bestimmung des ersten Referenz-Biegemoments und/oder der ersten Referenz-Axialkraft erfolgt insbesondere ohne Berücksichtigung des Rotorwinkels.

Ob das erste gemessene Biegemoment und/oder die erste gemessene Axialkraft für die Justierung berücksichtig werden, kann insbesondere von der Anzahl der Dehnungssensoren abhängen. Beispielsweise kann bei der Verwendung von drei Dehnungssensoren die erste gemessene Axialkraft berücksichtigt werden. Werden vier Dehnungssensoren verwendet, können beispielsweise das erste gemessene Biegemoment oder alternativ die erste gemessene Axialkraft und das erste gemessene Biegemoment verwendet werden.

Erfindungsgemäß werden das erste gemessene Biegemoment und/oder die erste gemessene Axialkraft basierend auf den Messwerten von dem zumindest einen Dehnungssensor des ersten Blattlastmesssystems und den initialen Justierungsparameterwerten des dem ersten Blattlastmesssystem zugeordneten ersten Justierungsparametersatzes bestimmt.

Das erste Referenz-Biegemoment und/oder die erste Referenz-Axialkraft können mit dem ersten gemessenen Biegemoment und der ersten gemessenen Axialkraft verglichen werden und eine erste Abweichung zwischen dem ersten Referenz-Biegemoment und/oder der ersten Referenz-Axialkraft von dem ersten gemessenen Biegemoment und/oder der ersten gemessenen Axialkraft kann bestimmt werden.

Basierend auf der ersten Abweichung werden die Justierungsparameterwerte des ersten Justierungsparametersatzes bestimmt, so dass die erste Abweichung kleiner gleich einem Schwellwert ist. Wenn die erste Abweichung kleiner als oder gleich einem definierten Schwellwert ist, werden die Justierungsparameterwerte des ersten Justierungsparametersatzes für die Justierung ausgewählt. Beispielsweise kann der Schwellwert eine erste Abweichung von höchstens 5,00 %, vorzugsweise höchstens 3,00 %, weiter vorzugsweise höchstens 1,00 % angeben.

Der erste Justierungsparametersatz des ersten Blattlastmesssystems kann einen oder mehrere geeignete Parameter zur Justierung des ersten Blattlastmesssystems bzw. des Dehnungssensors umfassen. Die initialen Justierungsparameterwerte des ersten Justierungsparametersatzes können beliebige festgelegte Parameterwerte sein. Die Rechenzeit kann verkürzt werden, wenn geeignete Justierungsparameterwerte als initiale Justierungsparameterwerte festgelegt werden. Beispielsweise können, insbesondere initiale, Justierungsparameterwerte eines Justierungsparametersatzes von einer strukturell und funktionell ähnlichen Windkraftanlage verwendet werden. Optional können, insbesondere initiale, Justierungsparameterwerte verwendet werden, die aus einer Steifigkeit des ersten Rotorblatts und/oder einer Position des ersten Dehnungssensors und/oder einer Wellenlänge des ersten Dehnungssensors ermittelt werden.

Basierend auf den angepassten Justierungsparametern der Justierungsmatrix können die Biegemomente in der Lastreferenzebene in zueinander orthogonalen Lastvektoren und/oder die Axialkräfte, die orthogonal zu der Lastreferenzebene wirken, bestimmt werden.

Die erste Axialkraft kann eine Kraft angeben, die von der Nabenmitte aus entlang der Blattachse in Richtung der Blattspitze wirkt. Zudem kann aus der ersten gemessenen Beschleunigung und der Masse des ersten Rotorblatts eine im Schwerpunkt des ersten Rotorblatts wirkende Kraft bestimmt werden. Weiterhin kann basierend auf der Gewichtskraft und einem Abstand des Schwerpunkts des Rotorblatts von der Nabenmitte ein erstes Biegemoment bestimmt werden. Die Masse und der Schwerpunkt des ersten Rotorblatts können beispielsweise aus einem Datenblatt des ersten Rotorblatts oder durch Wiegen des Rotorblatts in einem Schritt der Rotorblattfertigung oder vor der Montage des ersten Rotorblatts ermittelt werden. Dies hat den Vorteil, dass allein aus der Masse des ersten Rotorblatts, dem Abstand des Schwerpunkts zum Blattflansch und der ersten gemessenen Beschleunigung auf einfache Weise auf ein erstes Biegemoment und/oder eine erste Axialkraft bezogen auf den Blattflansch geschlossen werden kann. Weiterhin kann auch eine Auslegungsmassenverteilung genutzt werden um Schwerpunkt und Masse bezogen auf jede Blattradiusposition zu bestimmen und somit Biegemomente und/oder Axialkräfte bezogen auf diesen Blattschnitt zu justieren.

Wie bereits beschrieben, kann die Windkraftanlage zumindest ein erstes Rotorblatt umfassen. Ferner kann die Windkraftanlage mehrere, insbesondere zwei, weiter insbesondere drei, Rotorblätter umfassen. Die Rotorblätter können je in einem Winkelversatz zueinander gleichmäßig um die Nabe angeordnet sein. Sind beispielsweise zwei Rotorblätter vorgesehen, können diese in einem Winkelversatz von 180° zueinander angeordnet sein. Sind zum Beispiel drei Rotorblätter vorgesehen, können diese in einem Winkelversatz von je 120° zueinander angeordnet sein. Die Rotorblätter können hinsichtlich ihrer Abmessungen, ihrer Masse, ihrer Massenverteilung und ihres Schwerpunkts und somit ihres statischen Moments, d.h. dem Produkt aus Masse und Abstand des Schwerpunkts zu einem Bezugspunkt, identisch oder zumindest annähernd identisch, sein. Die Abweichung beträgt vorzugsweise höchstens 5%, vorzugsweise höchstens 2 %, weiter vorzugsweise 1%.

In einer vorteilhaften Ausführungsform kann das Verfahren ein Justieren eines zweiten Blattlastmesssystems mit zumindest einem Dehnungssensor an einem zweiten Rotorblatt umfassen, das die folgenden Schritte aufweist:
a) Bestimmen einer zweiten Beschleunigung, die dem zweiten Rotorblatt zugeordnet ist, basierend auf der ersten gemessenen Beschleunigung unter Berücksichtigung von einem Winkelversatz zwischen dem ersten und einem zweiten Rotorblatt;
b) Bestimmen eines zweiten Referenz-Biegemoments und/oder einer zweiten Referenz-Axialkraft basierend auf der zweiten Beschleunigung;
c) Bestimmen eines zweiten gemessenen Biegemoments und/oder einer zweiten gemessenen Axialkraft basierend auf Messwerten von dem zumindest einen Dehnungssensor des zweiten Blattlastmesssystems und einem zu dem zweiten Blattlastmesssystem zugeordneten zweiten Justierungsparametersatz mit zweiten initialen Justierungsparametern;
d) Bestimmen einer zweiten Abweichung des zweiten Referenz-Biegemoments und/oder der zweiten Referenz-Axialkraft von dem zweiten gemessenen Biegemoment und/oder der zweiten gemessenen Axialkraft;
e) Anpassen der Justierungsparameterwerte des zweiten Justierungsparametersatzes für das zweite Blattlastmesssystem derart, dass die zweite Abweichung kleiner gleich einem Schwellwert ist.

Die zweite Beschleunigung ist dem zweiten Rotorblatt zugeordnet und wird aus der ersten gemessenen Beschleunigung unter Berücksichtigung von einem Winkelversatz zwischen dem ersten und einem zweiten Rotorblatt bestimmt. Mit anderen Worten stellt die zweite Beschleunigung eine Transformation der ersten gemessenen Beschleunigung vom ersten Rotorblatt auf das zweite Rotorblatt abhängig vom Winkeln zwischen den Rotorblättern dar. Aus der zweiten Beschleunigung können das zweite Referenz-Biegemoment und/oder die zweite Referenz-Axialkraft bestimmt werden. Das zweite Referenz-Biegemoment und/oder die zweite Referenz-Axialkraft werden in der Regel auf den Blattflansch bezogen, können aber auch auf jede andere Position auf dem zweiten Rotorblatt bezogen werden. Am zweiten Rotorblatt ist zumindest ein zweites Blattlastmesssystem mit zumindest einem Dehnungssensor angeordnet, der das zweite gemessene Biegemoment und/oder die zweite gemessene Axialkraft bestimmt. Für die Art und Positionierung des zweiten Dehnungssensors gelten dieselben Bedingungen wie für den zumindest einen Dehnungssensor des ersten Blattlastmesssystems an dem ersten Rotorblatt.

Die zweite Abweichung kann ermittelt werden, indem das zweite Referenz-Biegemoment und/oder die zweite Referenz-Axialkraft mit dem zweiten gemessenen Biegemoment und/oder der zweiten gemessenen Axialkraft verglichen werden. Basierend auf der zweiten Abweichung werden die Justierungsparameterwerte des zweiten Justierungsparametersatzes angepasst, so dass die zweite Abweichung kleiner gleich dem Schwellwert ist. Der Schwellwert für die zweite Abweichung kann insbesondere dem Schwellwert für die erste Abweichung entsprechen. Indem lediglich eine erste Beschleunigung mit einem ersten Beschleunigungssensor gemessen wird, kann durch den Winkelversatz zwischen den Rotorblättern basierend auf der Anzahl der Rotorblätter auch das Blattlastmesssystem am zweiten Rotorblatt auf einfache Weise justiert werden.

Der zweite Justierungsparametersatz des zweiten Blattlastmesssystems kann einen oder mehrere geeignete Parameter zur Justierung des zweiten Blattlastmesssystems bzw. Dehnungssensors umfassen. Die initialen Justierungsparameterwerte des zweiten Justierungsparametersatzes können beliebige festgelegte Parameterwerten sein. Die Rechenzeit kann verkürzt werden, wenn geeignete Justierungsparameterwerte als initiale Justierungsparameterwerte festgelegt werden. Beispielsweise können, insbesondere initiale, Justierungsparameterwerte eines Justierungsparametersatzes von einer strukturell und funktionell ähnlichen Windkraftanlage verwendet werden. Optional können, insbesondere initiale, Justierungsparameterwerte verwendet werden, die aus einer Steifigkeit des zweiten Rotorblatts und/oder einer Position des zweiten Dehnungssensors und/oder einer Wellenlänge des zweiten Dehnungssensors ermittelt werden.

In einer vorteilhaften Ausführungsform können die Schritte a) bis d) wiederholt, insbesondere zumindest 50, weiter insbesondere zumindest 100, weiter insbesondere zumindest 1000, weiter insbesondere zumindest 10000 Wiederholungen, durchgeführt werden, wobei bei jeder Wiederholung unterschiedliche Pitch-Winkel und/oder unterschiedliche Beschleunigungen erfasst werden, und danach im Schritt e) die Justierungsparameterwerte derart angepasst werden, dass die in Schritt d) erfassten ersten bzw. zweiten Abweichungen kleiner gleich einem Schwellwert sind.

Beispielsweise können die Schritte a) bis d) in einer vorbestimmten Anzahl oder in für eine vorbestimmten Zeitspanne durchgeführt werden. Sowohl die Zeitspanne als auch die Anzahl an Wiederholungen der Schritte a) bis d) ist grundsätzlich nicht beschränkt. Zum Zweck der Erhöhung der Genauigkeit der Justierung kann die Zeitspanne und/oder die Anzahl an Wiederholungen der Schritte a) bis d) auf einen Mindestwert festgelegt sein. Ebenso kann zum Zweck der Zeit- und Kostenreduktion die Zeitspanne und/oder die Anzahl an Wiederholungen der Schritte a) bis d) auf einen Höchstwert begrenzt sein. Ebenso kann die Zeitspanne und/oder die Anzahl an Wiederholungen der Schritte a) bis d) unterbrochen und zu einem anderen Zeitpunkt fortgesetzt werden. Dies hat den Vorteil, dass das Justierungsverfahren unterbrochen werden kann, wenn aufgrund von äußeren Umwelteinflüssen ein Betrieb der Windkraftanlage zum Zwecke der Justierung nicht sicher durchgeführt werden kann. Die gesamte Zeitspanne kann beispielsweise zumindest zwei Minuten, vorzugsweise zumindest zehn Minuten, weiter vorzugsweise zumindest 15 Minuten und/oder höchstens eine Stunde, vorzugsweise höchstens 45 Minuten, weiter vorzugsweise höchstens 30 Minuten betragen. Die Zeitspanne bzw. die Anzahl der Wiederholungen der Schritte a) bis d) kann insbesondere abhängig davon bestimmt werden, wie häufig eine erste gemessene Beschleunigung verworfen wird. Die in Schritt d) bestimmten ersten bzw. zweiten Abweichungen können beispielsweise zu einer gemeinsamen ersten bzw. gemeinsamen zweiten Abweichung, beispielsweise in Form eines Vektors oder einer Matrix, die die ersten bzw. zweiten Abweichungen umfasst, zusammengefasst werden. Indem zunächst die Schritte a) bis d) wiederholt durchgeführt werden, kann eine Menge an Daten, insbesondere ersten bzw. zweiten Abweichungen, gesammelt werden, auf deren Basis ein erster Justierungsparametersatz bestimmt und ausgewählt wird. Dadurch kann eine Justierung zu einem späteren Zeitpunkt, abhängig von der vorbestimmten Zeitspanne oder der vorbestimmten Anzahl an Durchführungen erfolgen.

In einer vorteilhaften Ausführungsform kann vor Schritt a) ein Pitch-Winkel verwendet und/oder ein definierter Pitch-Winkel, insbesondere unterschiedliche Pitch-Winkel eingestellt werden. Beispielsweise können Pitchwinkelsignale verwendet werden, die standardmäßig von der Windkraftanlage erfasst werden. Eine Windkraftanlage wird üblicherweise bei unterschiedlichen Pitch-Winkeln betrieben. Indem ein definierter Pitch-Winkel eingestellt wird, insbesondere indem unterschiedliche Pitch-Winkel eingestellt werden, kann das erste Rotorblatt jederzeit in eine energie- und sicherheitstechnisch gute aerodynamische Stellung gebracht werden, sodass der Rotor der Windkraftanlage immer sicher im optimalen Arbeitspunkt arbeitet. Außerdem kann durch die Bestimmung des Pitch-Winkels ein kritischer Betriebszustand der Windkraftanlage identifiziert werden. Indem ein definierter Pitch-Winkel eingestellt wird, können Schäden an der Windkraftanlage während der Kalibrierung des ersten Blattlastsensors vermieden werden.

In einer vorteilhaften Ausführungsform kann die erste von dem ersten Beschleunigungssensor gemessene Beschleunigung verworfen werden, wenn eine Windgeschwindigkeit einen Windgeschwindigkeits-Schwellwert überschreitet. Die Windgeschwindigkeit, die in der Umgebung der Windkraftanlage vorherrscht, kann mittels Sensoren zur Erfassung von Windgeschwindigkeiten gemessen werden, die an oder in der Nähe der Windkraftanlage angeordnet sein können. Die gemessene Windgeschwindigkeit kann mit einem festgelegten Windgeschwindigkeits-Schwellwert für eine maximale Windgeschwindigkeit verglichen werden. Ist die gemessene aktuelle Windgeschwindigkeit kleiner als der Windgeschwindigkeits-Schwellwert für die maximale Windgeschwindigkeit, kann die erste gemessene Beschleunigung für die weitere Justierung des Blattlastmesssystems verwendet werden. Ist die Windgeschwindigkeit gleich oder größer als der Windgeschwindigkeits-Schwellwert für die maximale Windgeschwindigkeit, kann die erste gemessene Beschleunigung verworfen werden. Auf diese Weise kann sichergestellt werden, dass das erste Referenz-Biegemoment nicht übermäßig stark durch auftretende Windkräfte beeinflusst und somit verfälscht wird. Der Windgeschwindigkeits-Schwellwert für die maximale Windgeschwindigkeit kann beispielsweise 10 m/s, vorzugsweise 8 m/s, weiter vorzugsweise 5 m/s, weiter vorzugsweise 3 m/s betragen.

In einer bevorzugten Ausführungsform kann der erste Beschleunigungssensor Beschleunigungen in zumindest eine, insbesondere zwei, weiter insbesondere drei Raumrichtungen messen und/oder durch eine inertiale Messeinheit ausgebildet sein und/oder ein Beschleunigungssensor, vorzugsweise zwei, weiter vorzugsweise drei Beschleunigungssensoren in der Nabe der Windkraftanlage angeordnet sein.

Der erste Beschleunigungssensor kann positive und negative translatorische Beschleunigungen entlang einer, insbesondere zwei, weiter insbesondere allen drei Raumrichtungen bestimmen, d.h. in einer x-, y- und z-Richtung. Die erste gemessene Beschleunigung kann somit eine Beschleunigung in zumindest eine, insbesondere zwei, weiter insbesondere drei Richtungen von der x-Richtung, y-Richtung und z-Richtung beinhalten. Durch die Verwendung von mehr als einem ersten Beschleunigungssensor kann das Messsystem funktionell redundant ausgelegt werden, damit beim Ausfall eines Beschleunigungssensors die anderen Beschleunigungssensoren die Messfunktion übernehmen können. Dazu sind die Beschleunigungssensoren funktionell und strukturell identisch ausgebildet. Zudem kann die Genauigkeit der Messung erhöht werden, indem die Messwerte der einzelnen Beschleunigungssensoren miteinander verglichen werden, um Unterschiede und somit mögliche Messfehler zu identifizieren und einen korrekten Messwert zu erhalten.

Insbesondere kann der erste Beschleunigungssensor in der Nabe des Rotors angeordnet sein. Insbesondere kann der erste Beschleunigungssensor derart ausgerichtet sein, dass er eine Beschleunigung in Richtung einer Blattachse des ersten Rotorblatts messen kann. Der erste Beschleunigungssensor kann ferner zwei weitere Beschleunigungen orthogonal zur ersten gemessenen Beschleunigung messen.

In jeder Rotorblattstellung können unterschiedliche Kräfte und Momente auf das Rotorblatt wirken, die vom Blattlastmesssystem korrekt erfasst werden sollen. Daher kann es erforderlich sein, die einer Rotorblattstellung eindeutig zugeordnete Beschleunigung mit dem ersten Beschleunigungssensor zu bestimmen. Die erste gemessene Beschleunigung kann einer ersten Rotorblattstellung des ersten Rotorblatts zugeordnet sein. Die zweite gemessene Beschleunigung kann einer zweiten Rotorblattstellung des zweiten Rotorblatts zugeordnet sein, wobei das zweite Rotorblatt um einen Winkelversatz zum ersten Rotorblatt um die Nabe angeordnet sein kann. Eine Vielzahl von Rotorblattstellungen, kann einer gemessenen Beschleunigung zugeordnet sein. Eine einer Rotorblattstellung zugeordnete Beschleunigung kann beispielsweise über einen Beschleunigungsvektor angegebene werden, wobei der Vektor Beschleunigungen in drei orthogonale Raumrichtungen umfasst. Anhand der gemessenen Beschleunigung lassen sich Biegemomente und Axialkräfte über die bekannte Schwerpunktlage und Masse des Blattes direkt ermitteln.

Ist der erste Beschleunigungssensor um einen Montageversatz, z.B. eine translatorische oder rotatorische Verschiebung, insbesondere um einen Winkelversatz, von der Blattachse versetzt angeordnet, misst der Beschleunigungssensor unterschiedliche Beschleunigungen. Durch die exakte Positionierung und Ausrichtung des Beschleunigungssensors auf der Blattachse kann gewährleistet werden, dass die erste gemessene Beschleunigung und damit das erste Referenz-Biegemoment und/oder die erste Referenz-Axialkraft nicht aufgrund eines Montageversatzes verfälscht werden. In der Praxis kann dies jedoch nicht immer umsetzbar sein und eine tatsächliche Einbaurichtung der Sensoren kann von der beschriebenen optimalen Einbaurichtung abweichen. Es kann daher erforderlich sein, diesen Montageversatz zu identifizieren und beim Justieren des Blattlastmesssystems zu berücksichtigen, um die Genauigkeit der Justierung zu erhöhen.

Der Dehnungssensor kann jeder geeignete Sensor sein, wie zum Beispiel ein piezoelektrischer Dehnungsmessstreifen, ein Faser-Bragg-Gitter-Graphen, um Dehnungen mit oder ohne Temperaturkompensation zu erfassen. Je nach Anwendungsfall kann es erforderlich sein, dass der Dehnungssensor an einer bestimmten Position auf dem ersten bzw. zweiten Rotorblatt angeordnet wird. Daher kann sich der Dehnungssensor grundsätzlich an jeder beliebigen Position auf oder in dem ersten bzw. zweiten Rotorblatt befinden.

In einer vorteilhaften Ausführungsform kann der zumindest eine Dehnungssensor des ersten bzw. zweiten Blattlastmesssystems auf dem ersten bzw. zweiten Rotorblatt in einem radialen Bereich von höchstens 50 %, vorzugsweise höchstens 30 %, von der Länge des Rotorblatts ausgehend von dem Blattflansch angeordnet sein. Dadurch können die Bestimmung des ersten bzw. zweiten gemessenen Biegemoments und/oder der ersten bzw. zweiten gemessenen Axialkraft und damit die Genauigkeit der Justierung weiter erhöht werden. In einer vorteilhaften Ausführungsform kann die Justierung des ersten und/oder zweiten Blattlastmesssystems an dem ersten und/oder zweiten Rotorblatt durch eine Recheneinrichtung an der Windkraftanlage vor Ort und/oder von einer entfernten Recheneinrichtung ausgeführt werden. Je nach Anwendungsfall kann eine Justierung durch eine Recheneinrichtung an der Windkraftanlage vor Ort oder von einer entfernten Recheneinrichtung sinnvoll sein. Eine Recheneinrichtung an der Windkraftanlage vor Ort kann beispielsweise bei Offshore-Windkraftanlagen geeignet sein, um die Justierung des Blattlastmesssystems vor Ort auszuführen. Eine entfernte Recheneinrichtung kann gewünscht sein, um beispielsweise Korrekturen am Justierungsverfahren vorzunehmen oder das Justierungsverfahren zu überwachen. Wird die Justierung von einer entfernten Recheneinrichtung ausgeführt, ist insbesondere eine Einheit zum Speichern von Messdaten und zum kabellosen oder kabelgebundenen Transportieren der Messdaten an die entfernte Recheneinheit von Vorteil. Die Recheneinrichtung kann Teil des Blattlastmesssystems sein. Die Recheneinrichtung kann aus einem oder mehreren Recheneinheiten bestehen. Ferner kann die Justierung des ersten bzw. zweiten Blattlastmesssystems von einer gemeinsamen, d.h. derselben Recheneinrichtung oder von unterschiedlichen Recheneinrichtungen ausgeführt werden.

Die eingangs genannte Aufgabe wird weiterhin insbesondere durch eine Vorrichtung zur Justierung von einem ersten Blattlastmesssystem mit zumindest einem Dehnungssensor in einem ersten Rotorblatt einer Windkraftanlage gelöst, die Folgendes aufweist:
- Einheit zum Messen von einer Beschleunigung, die dazu ausgebildet ist, eine erste Beschleunigung mit einem ersten Beschleunigungssensor zu messen;
- Einheit zum Bestimmen von einem Biegemoment und/oder einer Axialkraft, die dazu ausgebildet ist, ein erstes Referenz-Biegemoment und/oder eine erste Referenz-Axialkraft basierend auf der ersten gemessenen Beschleunigung zu bestimmen und ein erstes gemessenes Biegemoment und/oder eine erste gemessene Axialkraft basierend auf Messwerten von dem zumindest einen Dehnungssensor des ersten Blattlastmesssystems und einem zu dem ersten Blattlastmesssystem zugeordneten ersten Justierungsparametersatz mit ersten initialen Justierungsparameterwerten zu bestimmen;
- Einheit zum Bestimmen einer Abweichung von Biegemomenten und Axialkräften, die dazu ausgebildet ist, eine erste Abweichung des ersten Referenz-Biegemoments und/oder der ersten Referenz-Axialkraft von dem ersten gemessenen Biegemoment und/oder der ersten gemessenen Axialkraft zu bestimmen;
- Einheit zum Anpassen von Justierungsparameterwerten eines Justierungsparametersatzes für ein Blattlastmesssystem, die dazu ausgebildet ist Justierungsparameterwerte des ersten Justierungsparametersatzes für das erste Blattlastmesssystem derart anzupassen, dass die erste Abweichung kleiner gleich einem Schwellwert ist.

Die hierin beschriebene Vorrichtung kann insbesondere unter Verwendung des hierin beschriebenen Verfahrens zur Justierung von einem ersten Blattlastmesssystem mit zumindest einem Dehnungssensor verwendet werden bzw. das Verfahren kann durch die beschriebene Vorrichtung umgesetzt werden. Insofern sind die hinsichtlich des Verfahrens beschriebenen Abwandlungen und Weiterbildungen auch hinsichtlich der Vorrichtung anwendbar.

In einer vorteilhaften Ausführungsform kann die Vorrichtung zur Justierung von einem zweiten Blattlastmesssystem mit zumindest einem Dehnungssensor an einem zweiten Rotorblatt einer Windkraftanlage geeignet sein, wobei
- die Einheit zum Messen von einer Beschleunigung dazu ausgebildet ist, eine zweite Beschleunigung basierend auf der ersten gemessenen Beschleunigung und unter Berücksichtigung von einem Winkelversatz zwischen dem ersten und dem zweiten Rotorblatt zu bestimmen;
- wobei die Einheit zum Bestimmen von einem Biegemoment und/oder einer Axialkraft dazu ausgebildet ist, ein zweites Referenz-Biegemoment und/oder eine zweite Referenz-Axialkraft basierend auf der zweiten Beschleunigung zu bestimmen und ein zweites gemessenes Biegemoment und/oder eine zweite gemessene Axialkraft basierend auf Messwerten von dem zumindest einen Dehnungssensor des zweiten Blattlastmesssystems und einem zu dem zweiten Blattlastmesssystem zugeordneten zweiten Justierungsparametersatz mit zweiten initialen Justierungsparameterwerten zu bestimmen;
- wobei die Einheit zum Bestimmen einer Abweichung von Biegemomenten und Axialkräften dazu ausgebildet ist, eine zweite Abweichung des zweiten Referenz-Biegemoments und/oder der zweiten Referenz-Axialkraft von dem zweiten gemessenen Biegemoment und/oder der zweiten gemessenen Axialkraft zu bestimmen;
- wobei die Einheit zum Anpassen von Justierungsparameterwerten eines Justierungsparametersatzes für ein Blattlastmesssystem dazu ausgebildet ist, Justierungsparameterwerte des zweiten Justierungsparametersatzes für das zweite Blattlastmesssystem derart anzupassen, dass die zweite Abweichung kleiner gleich einem Schwellwert ist.

In einer vorteilhaften Ausführungsform kann die Vorrichtung ferner eine Pitch-Winkel-Verwendungs- und/oder Einstelleinheit umfassen, um einen Pitch-Winkel zu verwenden und/oder einen definierten Pitch-Winkel, insbesondere unterschiedliche Pitch-Winkel einzustellen.

In einer vorteilhaften Ausführungsform kann die Vorrichtung ferner eine Einheit zum Verwerfen einer Beschleunigung umfassen, die dazu ausgebildet ist, eine Windgeschwindigkeit mit einem Windgeschwindigkeits-Schwellwert zu vergleichen und die erste gemessene Beschleunigung auszuwählen, wenn die Windgeschwindigkeit kleiner als ein Windgeschwindigkeits-Schwellwert ist und die erste gemessene Beschleunigung zu verwerfen, wenn die Windgeschwindigkeit größer als ein Windgeschwindigkeits-Schwellwert ist.

Die Aufgabe wird ferner insbesondere gelöst durch eine Windkraftanlage, die einen Rotor mit einer Nabe und einem Rotorblatt aufweist, das sich radial von der Nabe erstreckt, wobei die Anzahl an Rotorblättern zumindest ein erstes Rotorblatt umfasst, und die Windkraftanlage mit einer Vorrichtung, wie sie vorstehend beschrieben ist, versehen ist.

Es ergeben sich ähnliche oder identische Vorteile, wie sie bereits im Zusammenhang mit dem vorstehend beschriebenen Verfahren beschrieben worden sind.

Die Aufgabe wird ferner insbesondere gelöst durch ein computerlesbares Speichermedium, welches Instruktionen enthält, die bewirken, dass die Vorrichtung nach einem der Ansprüche 9 bis 12 die Verfahrensschritte gemäß einem der Ansprüche 1 bis 8 ausführt.

Es ergeben sich ähnliche oder identische Vorteile, wie sie bereits im Zusammenhang mit dem vorstehend beschriebenen Verfahren beschrieben worden sind. Weitere Ausführungsformen ergeben sich aus den Unteransprüchen.

### Kurze Beschreibung der Zeichnungen

Im Folgenden wird die Erfindung anhand von Ausführungsbeispielen näher erläutert. Dabei zeigen:
Figur 1: eine schematische Seitenansicht einer Windkraftanlage mit Rotorblättern gemäß einer hierin beschriebenen Ausführungsform;
Figur 2: eine schematische Seitenansicht eines Rotorblatts gemäß einer hierin beschriebenen Ausführungsform;
Figur 3: ein Ablaufdiagramm eines Verfahrens zur Justierung von einem ersten Blattlastmesssystem mit zumindest einem Dehnungssensor an einem ersten Rotorblatt gemäß einer hierin beschriebenen Ausführungsform.
Figur 4: ein Ablaufdiagramm eines Verfahrens zur Justierung von einem zweiten Blattlastmesssystem mit zumindest einem Dehnungssensor an einem zweiten Rotorblatt gemäß einer hierin beschriebenen Ausführungsform.

### Beschreibung der Ausführungsform/en

Nachstehend werden Ausführungsbeispiele der Erfindung erläutert. In den Zeichnungen bezeichnen gleiche Bezugszeichen die gleichen oder ähnlichen Merkmale der jeweiligen Ausführungsformen.

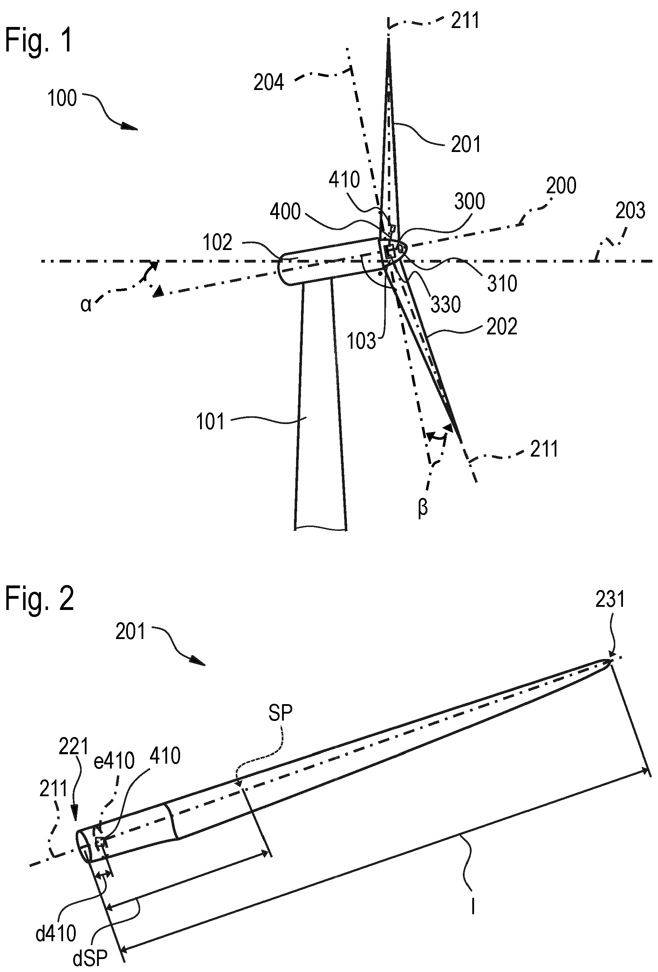

Figur 1 zeigt eine schematische Seitenansicht einer Windkraftanlage 100 mit einem ersten 201, zweiten 202 und dritten (hier nicht dargestellt) Rotorblatt gemäß hierin beschriebenen Ausführungsformen. Die Windkraftanlage 100 beinhaltet einen Turm 101 und eine Gondel 102. An der Gondel 102 ist ein Rotor befestigt. Der Rotor beinhaltet eine Nabe 103, an der die Rotorblätter 201, 202 befestigt sind. Gemäß typischen Ausführungsformen hat der Rotor zumindest ein, vorzugsweise zwei Rotorblätter, weiter vorzugsweise drei Rotorblätter. Beim Betrieb der Windkraftanlage rotiert der Rotor, d.h. die Nabe 103 mit den daran montierten Rotorblättern um eine Achse 200, die einer Mittelachse der Gondel 102 durch eine Nabenmitte entspricht. Die Gondel 102 bzw. deren Mittelachse 200 ist dabei gegenüber einer horizontalen Ausrichtung dieser in Bezug auf eine ebene, horizontale Erdoberfläche, d.h. einer horizontalen Mittelachse 203, um einen Tiltwinkel α von acht Grad geneigt. Entlang einer Längserstreckung jedes Rotorblatts 201, 202 verläuft eine Achse 211. Die Rotorblätter 201, 202 bzw. deren jeweiligen Achsen 211 sind in Bezug auf eine Achse 204 in einer Rotationsebene des Rotors bzw. senkrecht zur Mittelachse 200 um einen Konuswinkel β von vier Grad vom Turm weggeneigt. Dabei wird ein Generator zur Stromerzeugung angetrieben.

Wie in Figur 1 dargestellt, ist zumindest ein erster Beschleunigungssensor 310 in der Nabe 103 zur Verfügung gestellt. Der erste Beschleunigungssensor 310 ist über eine Signalleitung 300 mit einer Auswerteeinheit 330 verbunden, die die gemessenen Signale auswertet. Gemäß einigen Ausführungsformen, die mit anderen Ausführungsformen kombiniert werden können, handelt es sich bei dem ersten Beschleunigungssensor 310 um einen 6-DOF-Beschleunigungssensor, der Beschleunigungen und Winkelbeschleunigungen in drei Raumrichtungen, d.h. sechs Freiheitsgarden misst.

Ferner ist in Figur 1 ein erstes Blattlastmesssystem 410 umfassend vier Dehnungssensoren in der Nähe des Blattflansches an dem ersten Rotorblatt 201 angeordnet. Jeder Dehnungssensor ist als faseroptischer Sensor ausgebildet. Für faseroptische Dehnungssensoren wird ein optisches Signal mittels eines Lichtleiters 400, zum Beispiel einer optischen Faser, an die Auswerteeinheit 330 übertragen.

Figur 2 zeigt eine schematische Seitenansicht des ersten Rotorblatts 201 gemäß hierin beschriebenen Ausführungsformen. Die Länge I des Rotorblatts 201 reicht von einem Blattflansch 221 zu einer Blattspitze 231. In Fig. 2 wird ebenso der Schwerpunkt SP und dessen Abstand d_{SP} vom Blattflansch des Rotorblatts veranschaulicht. Weiterhin zeigt Figur 2 die Positionierung des ersten Blattlastmesssystems 410 auf dem ersten Rotorblatt in einem Abstand d₄₁₀ von 2 % von der Länge des Rotorblatts ausgehend von dem Blattflansch 221. Das erste Blattlastmesssystem umfasst vier symmetrisch innerhalb einer ersten Ebene e₄₁₀ eines Rotorblattquerschnitts angeordnete Dehnungssensoren, sodass für die Justierung lediglich Biegemomente benötigt werden.

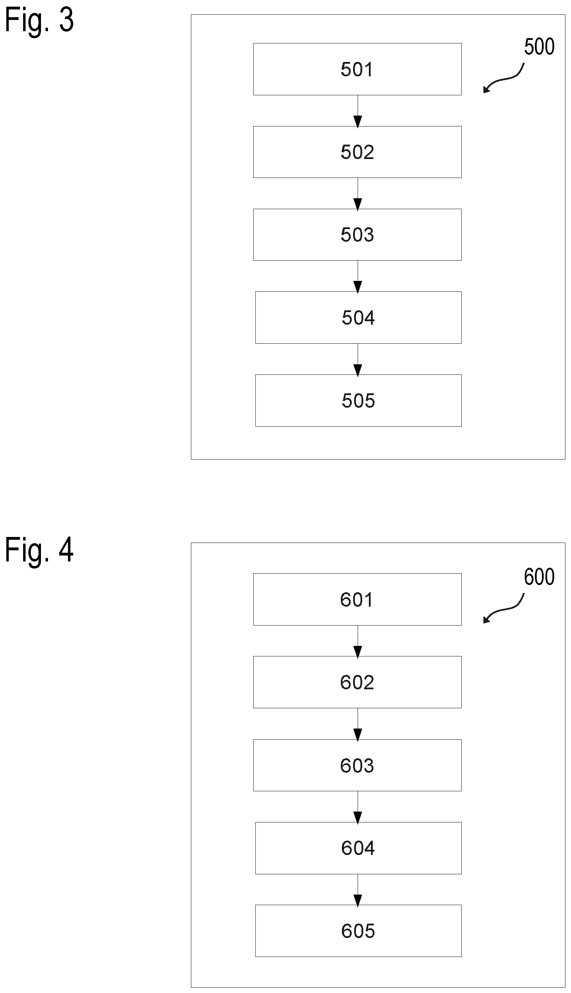

Figur 3 zeigt ein Ablaufdiagramm eines Verfahrens 500 zum Justieren des ersten Blattlastmesssystems 410 bzw. dessen Dehnungssensoren gemäß der hierin beschriebenen Ausführungsform. Bei einer Rotation des Rotors und damit des ersten Rotorblatts 201 um die Rotationsache 200 erfahren auch der erste Beschleunigungssensor 310 und die Dehnungssensoren des ersten Blattlastmesssystems 410 eine entsprechende Rotationsbewegung. Je nach Stellung des ersten Rotorblatts 201 wirken auf das erste Rotorblatt unterschiedliche Beschleunigungen, Kräfte und Momente. Beispielsweise befindet sich das erste Rotorblatt 201 in einer ersten Stellung S1, wenn seine Blattachse 211 horizontal, d.h. orthogonal zu einer Längsachse des Turms 101 orientiert ist.

In einem ersten Schritt 501 misst der erste Beschleunigungssensor 310 in dieser ersten Stellung S1 eine erste Beschleunigung. Der erste Beschleunigungssensor 310 ist in der rotierenden Nabe angeordnet und so ausgerichtet, dass er Beschleunigungen entlang der Blattachse 211 messen kann; optional kann er Beschleunigungen in drei beliebige, zueinander orthogonale Raumrichtungen messen, um daraus die Berechnung der Beschleunigung in Blattachsenrichtung 211 zu ermöglichen; diese wird im Folgenden als erste gemessene Beschleunigung in z-Richtung des ersten Rotorblatts bezeichnet. Der erste Beschleunigungssensor 310 kann weiter zwei weitere Beschleunigungen orthogonal zur ersten gemessenen Beschleunigung in z-Richtung messen oder deren Berechnung aus den Beschleunigungsmessungen aus mehreren Raumrichtungen ermöglichen; diese werden im Folgenden als erste gemessene Beschleunigung in y-Richtung und als erste gemessene Beschleunigung in x-Richtung des ersten Rotorblatts bezeichnet.

Die Erdgravitationsbeschleunigung am Rotorblatt teilt sich vektoriell abhängig vom Konuswinkel, dem Tiltwinkel, dem Pitchwinkel und der Rotorblattstellung um die Rotationsachse 200 auf. In der ersten Stellung S1 ist die Erdgravitationsbeschleunigung in z-Richtung entlang der Blattachse 211 gleich null und die Erdbeschleunigung von 9,81m/s² teilt sich lediglich auf eine Beschleunigung in y-Richtung und eine Beschleunigung in x-Richtung auf.

Aus der Fertigung des ersten, zweiten und dritten Rotorblatts ist bekannt, dass die Masse M eines Rotorblatts 20 000 kg beträgt und der Schwerpunkt SP entlang der Blattachse 211 des Rotorblatts in einem Abstand d_{SP} von 20 m von dem Blattflansch 221 entfernt liegt.

In einem zweiten Schritt 502 wird ein erstes Referenz-Biegemoment M_{B-1-Beschleuni-gungssensor} des ersten Rotorblatts 201 bezogen auf den Blattflansch 221 als Lastreferenzquerschnitt basierend auf der ersten gemessenen Beschleunigung bestimmt. Das erste Referenz-Biegemoment des ersten Rotorblatts M_{B-1-Beschleunigungssensor} beträgt 3924 kNm.

Ebenso erfährt das Rotorblatt an der ersten Ebene des Rotorblattquerschnitts in dieser ersten Stellung S1 eine Kraft- und Momentenwirkung, welche von den Dehnungssensoren des ersten Blattlastmesssystems 410 erfasst werden. In einem dritten Schritt 503 wird basierend auf den Messungen der Dehnungssensoren und einem zu dem ersten Blattlastmesssystem zugeordneten ersten Justierungsparametersatz mit ersten initialen Justierungsparameterwerten ein erstes gemessenes Biegemoment M_{B-1-Dehnungssensor} des ersten Rotorblatts 201 bezogen auf den Blattflansch 221 als Lastreferenzschnitt bestimmt. Im vorliegenden Fall wird ein erstes gemessenes Biegemoment M_{B-1-Dehnungssensor} für das erste Rotorblatt von 3610 kNm bestimmt.

In einem nächsten Schritt 504 wird das erste Referenz-Biegemoment M_{B-1-Beschleuni-gungssensor} mit dem ersten gemessenen Biegemoment M_{B-1-Dehnungssensor} verglichen, um eine erste Abweichung A1 zu bestimmen. Die erste Abweichung A1 beträgt in der beschriebenen Ausführungsform 8 %.

In einem nächsten Schritt 505 werden basierend auf der ersten Abweichung A1 die Justierungsparameterwerte des ersten Justierungsparametersatzes KP1 für das erste Blattlastmesssystem derart angepasst, dass die erste Abweichung A1 kleiner gleich einem Schwellwert ist. Der Schwellwert S beträgt in der beschriebenen Ausführungsform 1 %. Bei einem gemessenen Biegemoment von M_{B-1-Dehnungs-sensor} von 3904 kNm beträgt die erste Abweichung A1 0.5% und ist somit kleiner als der Schwellwert S, sodass die Justierungsparameterwerte des Justierungsparametersatzes KP1 zur Justierung des ersten Blattlastmesssystems bzw. dessen Dehnungssensoren ausgewählt werden.

Figur 4 zeigt ein Ablaufdiagramm eines Verfahrens 600 zur Justierung eines zweiten Blattlastmesssystems 420 gemäß hierin beschriebenen Ausführungsformen. Die Windkraftanlage weist ein zweites Rotorblatt 202 auf, das in einem Winkelversatz W von 180° zum ersten Rotorblatt 201 an der Nabe angeordnet ist. In einem ersten Schritt 601 wird eine zweite Beschleunigung, die dem zweiten Rotorblatt zugeordnet ist, basierend auf der ersten gemessenen Beschleunigung 311 und dem Winkelversatz W zwischen dem ersten und dem zweiten Rotorblatt bestimmt. Die erste gemessene Beschleunigung in x-, y- und z-Richtung wird daher in eine zweite Beschleunigung in x-, y- und z-Richtung überführt.

In einem zweiten Schritt 602 wird ein zweites Referenz-Biegemoment M_{B-2-Beschleu-nigungssensor} des zweiten Rotorblatts 202 aus der zweiten Beschleunigung bestimmt. Das zweite Referenz-Biegemoment M_{B-2-Beschleunigungssensor} am zweiten Rotorblatt beträgt -3924 kNm. Die Dehnungssensoren des zweiten Blattlastmesssystems 420 befinden sich wie die Dehnungssensoren des ersten Blattlastmesssystems 410 in der Nähe des Blattflansches.

In einem dritten Schritt wird basierend auf den Messungen der Dehnungssensoren des zweiten Blattlastmesssystems 420 des zweiten Rotorblattes und einem zu dem zweiten Blattlastmesssystem 420 zugeordneten zweiten Justierungsparametersatz mit zweiten initialen Justierungsparameterwerten ein zweites gemessenes Biegemoment M_{B-2-Dehnungssensor} des zweiten Rotorblatts 202 bezogen auf den Lastreferenzschnitt, d.h. den Blattflansch 221 des zweiten Rotorblatts 202, bestimmt.

Im vorliegenden Fall bestimmt das zweite Blattlastmesssystem ein zweites gemessenes Biegemoment M_{B-2-Dehnungssensor} des zweiten Rotorblattes von -3010 kNm.

In einem nächsten Schritt 604 wird das zweite Referenz-Biegemoment des zweiten Rotorblattes M_{B-2-Beschleunigungssensor} mit dem zweiten gemessenen Biegemoment des zweiten Rotorblattes M_{B-2-Dehnungssensor} verglichen und eine zweite Abweichung A2 bestimmt, die in der beschriebenen Ausführungsform 23 % beträgt.

In einem nächsten Schritt 605 werden basierend auf der zweiten Abweichung A2 die Justierungsparameterwerte des zweiten Justierungsparametersatzes KP2 für das zweite Blattlastmesssystem 420 derart angepasst, dass die zweite Abweichung A2 kleiner gleich dem Schwellwert von 1 % ist. Bei einem zweiten gemessenen Biegemoment des zweiten Rotorblattes von M_{B-2-Dehnungssensor} von -3889 kNm beträgt die zweite Abweichung A2 0.9% und ist somit kleiner als der Schwellwert S, weshalb die Justierungsparameterwerte des zweiten Justierungsparametersatzes KP2 zum Justieren des zweiten Blattlastmesssystems bzw. dessen Dehnungssensoren am zweiten Rotorblatt ausgewählt werden.

### Bezugszeichenliste

100 Windkraftanlage
101 Turm
102 Gondel
103 Nabe
200 Rotationsachse des Rotors
201/202 erstes/zweites Rotorblatt
203 horizontale Mittelachse der Gondel
204 Achse in der Rotationsebene des Rotors
W Winkel zwischen den Rotorblättern um die Rotationsachse
211 Blattachse
221 Blattflansch
231 Blattspitze
I Länge des Rotorblatts vom Blattflansch zur Blattspitze
M Masse des Rotorblatts
SP Schwerpunkt des Rotorblatts
d_{SP} Abstand des Schwerpunkts vom Blattflansch des Rotorblatts
e₄₁₀ erste Ebene des Rotorblattquerschnitts des ersten Rotorblatts
d₄₁₀ Abstand des ersten Blattlastmesssystems 410 auf dem ersten Rotorblatt vom Blattflansch
S1 erste Stellung des ersten Rotorblatts
300 Signalleitung
310 erster Beschleunigungssensor
330 Auswerteeinheit
400 Lichtleiter
410 erstes Blattlastmesssystem mit vier Dehnungssensoren des ersten Rotorblatts
420 zweites Blattlastmesssystem mit vier Dehnungssensoren des zweiten Rotorblatts
M_{B-1-Beschleunigugssensor} erstes Referenz-Biegemoment aufgrund von Beschleunigungen am ersten Rotorblatt
M_{B-2-Beschleunigungssensor} zweites Referenz-Biegemoment aufgrund von Beschleunigungen am zweiten Rotorblatt
M_{B-1-Dehnungssensor} erstes gemessenes Biegemoment basierend auf Messwerten von dem zumindest einem Dehnungssensor des ersten Blattlastmesssystems und einem zu dem ersten Blattlastmesssystem zugeordneten ersten Justierungsparametersatz mit ersten initialen Justierungsparameterwerten
M_{B-2-Dehnungssensor} zweites gemessenes Biegemoment basierend auf Messwerten von dem zumindest einem Dehnungssensor des zweiten Blattlastmesssystems und einem zu dem zweiten Blattlastmesssystem zugeordneten zweiten Justierungsparametersatz mit zweiten initialen Justierungsparameterwerten
A1/A2 erste/zweite Abweichung
S Schwellwert
KP1/KP2 erster/zweiter Justierungsparametersatz für das erste/ zweite Blattlastmesssystem des ersten/zweiten Rotorblatts
500 Verfahren zum Justieren von einem ersten Blattlastmesssystem mit zumindest einem Dehnungssensor
501 Messen von einer ersten Beschleunigung mit einem ersten Beschleunigungssensor
502 Bestimmen eines ersten Referenz-Biegemoments basierend auf der ersten gemessenen Beschleunigung des ersten Rotorblatts
503 Bestimmen eines ersten gemessenen Biegemoments basierend auf Messwerten von dem zumindest einem Dehnungssensor des ersten Blattlastmesssystems und einem zu dem ersten Blattlastmesssystem zugeordneten ersten Justierungsparametersatz mit ersten initialen Justierungsparameterwerten
504 Bestimmen einer ersten Abweichung des ersten Referenz-Biegemoments von dem ersten gemessenen Biegemoment
505 Anpassen der Justierungsparameterwerte des ersten Justierungsparametersatzes für das erste Blattlastmesssystem derart, dass die erste Abweichung kleiner gleich einem Schwellwert ist
600 Verfahren zum Justieren von einem zweiten Blattlastmesssystem mit zumindest einem Dehnungssensor
601 Bestimmen einer zweiten Beschleunigung, die dem zweiten Rotorblatt zugeordnet ist, basierend auf der ersten gemessenen Beschleunigung und einem Winkelversatz zwischen dem ersten und einem zweiten Rotorblatt
602 Bestimmen eines zweiten Referenz-Biegemoments basierend auf der zweiten Beschleunigung des zweiten Rotorblatts
603 Bestimmen eines zweiten gemessenen Biegemoments basierend auf Messwerten von dem zumindest einen Dehnungssensor des zweiten Blattlastmesssystems und einem zu dem zweiten Blattlastmesssystem zugeordneten zweiten Justierungsparametersatz mit zweiten initialen Justierungsparametern
604 Bestimmen einer zweiten Abweichung des zweiten Referenz-Biegemoments von dem zweiten gemessenen Biegemoment
605 Anpassen der Justierungsparameterwerte des zweiten Justierungsparametersatzes für das zweite Blattlastmesssystem derart, dass die zweite Abweichung kleiner gleich einem Schwellwert ist

## Patentansprüche

1. Computerimplementiertes Verfahren zur Justierung von einem ersten Blattlastmesssystem mit zumindest einem Dehnungssensor an einem ersten Rotorblatt einer Windkraftanlage, das folgende Schritte aufweist:
a) Messen einer ersten Beschleunigung mit einem ersten Beschleunigungssensor;
b) Bestimmen eines ersten Referenz-Biegemoments und/oder einer ersten Referenz-Axialkraft basierend auf der ersten gemessenen Beschleunigung;
c) Bestimmen eines ersten gemessenen Biegemoments und/oder einer ersten gemessenen Axialkraft basierend auf Messwerten von dem zumindest einen Dehnungssensor des ersten Blattlastmesssystems und einem zu dem ersten Blattlastmesssystem zugeordneten ersten Justierungsparametersatz mit ersten initialen Justierungsparameterwerten;
d) Bestimmen einer ersten Abweichung des ersten Referenz-Biegemoments und/oder der ersten Referenz-Axialkraft von dem ersten gemessenen Biegemoment und/oder der ersten gemessenen Axialkraft;
e) Anpassen der Justierungsparameterwerte des ersten Justierungsparametersatzes für das erste Blattlastmesssystem derart, dass die erste Abweichung kleiner gleich einem Schwellwert ist.

2. Computerimplementiertes Verfahren nach Anspruch 1, **dadurch gekennzeichnet, dass** das Verfahren ein Justieren eines zweiten Blattlastmesssystems mit zumindest einem Dehnungssensor an einem zweiten Rotorblatt umfasst, das die folgenden Schritte aufweist:
a) Bestimmen einer zweiten Beschleunigung, die dem zweiten Rotorblatt zugeordnet ist, basierend auf der ersten gemessenen Beschleunigung unter Berücksichtigung von einem Winkelversatz zwischen dem ersten und einem zweiten Rotorblatt;
b) Bestimmen eines zweiten Referenz-Biegemoments und/oder einer zweiten Referenz-Axialkraft basierend auf der zweiten Beschleunigung;
c) Bestimmen eines zweiten gemessenen Biegemoments und/oder einer zweiten gemessenen Axialkraft basierend auf Messwerten von dem zumindest einen Dehnungssensor des zweiten Blattlastmesssystems und einem zu dem zweiten Blattlastmesssystem zugeordneten zweiten Justierungsparametersatz mit zweiten initialen Justierungsparametern;
d) Bestimmen einer zweiten Abweichung des zweiten Referenz-Biegemoments und/oder der zweiten Referenz-Axialkraft von dem zweiten gemessenen Biegemoment und/oder der zweiten gemessenen Axialkraft;
e) Anpassen der Justierungsparameterwerte des zweiten Justierungsparametersatzes für das zweite Blattlastmesssystem derart, dass die zweite Abweichung kleiner gleich einem Schwellwert ist.

3. Computerimplementiertes Verfahren nach Anspruch 1 oder 2, **dadurch gekennzeichnet, dass** die Schritte a) bis d) wiederholt, insbesondere zumindest 50, weiter insbesondere zumindest 100, weiter insbesondere zumindest 1000, weiter insbesondere zumindest 10000 Wiederholungen, durchgeführt werden, wobei bei jeder Wiederholung unterschiedliche Pitch-Winkel und/oder unterschiedliche Beschleunigungen erfasst werden, und danach im Schritt e) die Justierungsparameterwerte derart angepasst werden, dass die in Schritt d) erfassten ersten bzw. zweiten Abweichungen kleiner gleich einem Schwellwert sind.

4. Computerimplementiertes Verfahren nach einem der vorhergehenden Ansprüche, **dadurch gekennzeichnet, dass** vor Schritt a) ein Pitch-Winkel verwendet und/oder ein definierter Pitch-Winkel, insbesondere unterschiedliche Pitch-Winkel eingestellt werden.

5. Computerimplementiertes Verfahren nach einem der vorhergehenden Ansprüche, **dadurch gekennzeichnet**, das die erste gemessene Beschleunigung verworfen wird, wenn eine Windgeschwindigkeit einen Windgeschwindigkeits-Schwellwert überschreitet.

6. Computerimplementiertes Verfahren nach einem der vorhergehenden Ansprüche, **dadurch gekennzeichnet, dass** der erste Beschleunigungssensor Beschleunigungen in zumindest eine, insbesondere zwei, weiter insbesondere drei Raumrichtungen misst und/oder durch eine inertiale Messeinheit ausgebildet ist und/oder dass ein Beschleunigungssensor, vorzugsweise zwei, weiter vorzugsweise drei Beschleunigungssensoren in der Nabe der Windkraftanlage angeordnet ist.

7. Computerimplementiertes Verfahren nach einem der vorhergehenden Ansprüche, **dadurch gekennzeichnet, dass** der zumindest eine Dehnungssensor des ersten bzw. zweiten Blattlastmesssystems auf dem erste bzw. zweiten Rotorblatt in einem radialen Bereich von höchstens 50%, vorzugsweise höchstens 30 %, von der Länge des Rotorblatts ausgehend von dem Blattflansch angeordnet ist.

8. Computerimplementiertes Verfahren nach einem der vorhergehenden Ansprüche, **dadurch gekennzeichnet, dass** die Justierung des ersten und/oder zweiten Blattlastmesssystems an dem ersten und/oder zweiten Rotorblatt durch eine Recheneinrichtung an der Windkraftanlage vor Ort und/oder von einer entfernten Recheneinrichtung ausgeführt wird.

9. Vorrichtung zur Justierung von einem ersten Blattlastmesssystem mit zumindest einem Dehnungssensor an einem ersten Rotorblatt einer Windkraftanlage, Folgendes aufweisend:
- Einheit zum Messen von einer Beschleunigung, die dazu ausgebildet ist, eine erste Beschleunigung mit einem ersten Beschleunigungssensor zu messen;
- Einheit zum Bestimmen von einem Biegemoment und/oder einer Axialkraft, die dazu ausgebildet ist, ein erstes Referenz-Biegemoment und/oder eine erste Referenz-Axialkraft basierend auf der ersten gemessenen Beschleunigung zu bestimmen und ein erstes gemessenes Biegemoment und/oder eine erste gemessene Axialkraft basierend auf Messwerten von dem zumindest einen Dehnungssensor des ersten Blattlastmesssystems und einem zu dem ersten Blattlastmesssystem zugeordneten ersten Justierungsparametersatz mit ersten initialen Justierungsparameterwerten zu bestimmen;
- Einheit zum Bestimmen einer Abweichung von Biegemomenten und Axialkräften, die dazu ausgebildet ist, eine erste Abweichung des ersten Referenz-Biegemoments und/oder der ersten Referenz-Axialkraft von dem ersten gemessenen Biegemoment und/oder der ersten gemessenen Axialkraft zu bestimmen;
- Einheit zum Anpassen von Justierungsparameterwerten eines Justierungsparametersatzes für ein Blattlastmesssystem, die dazu ausgebildet ist Justierungsparameterwerte des ersten Justierungsparametersatzes für das erste Blattlastmesssystem derart anzupassen, dass die erste Abweichung kleiner gleich einem Schwellwert ist.

10. Vorrichtung nach Anspruch 9, **dadurch gekennzeichnet, dass** die Vorrichtung zur Justierung von einem zweiten Blattlastmesssystem mit zumindest einem Dehnungssensor an einem zweiten Rotorblatt einer Windkraftanlage geeignet ist, wobei
- die Einheit zum Messen von einer Beschleunigung dazu ausgebildet ist, eine zweite Beschleunigung basierend auf der ersten gemessenen Beschleunigung und unter Berücksichtigung von einem Winkelversatz zwischen dem ersten und dem zweiten Rotorblatt zu bestimmen;
- wobei die Einheit zum Bestimmen von einem Biegemoment und/oder einer Axialkraft dazu ausgebildet ist, ein zweites Referenz-Biegemoment und/oder eine zweite Referenz-Axialkraft basierend auf der zweiten Beschleunigung zu bestimmen und ein zweites gemessenes Biegemoment und/oder eine zweite gemessene Axialkraft basierend auf Messwerten von dem zumindest einen Dehnungssensor des zweiten Blattlastmesssystems und einem zu dem zweiten Blattlastmesssystem zugeordneten zweiten Justierungsparametersatz mit zweiten initialen Justierungsparameterwerten zu bestimmen;
- wobei die Einheit zum Bestimmen einer Abweichung von Biegemomenten und Axialkräften dazu ausgebildet ist, eine zweite Abweichung des zweiten Referenz-Biegemoments und/oder der zweiten Referenz-Axialkraft von dem zweiten gemessenen Biegemoment und/oder der zweiten gemessenen Axialkraft zu bestimmen;
- wobei die Einheit zum Anpassen von Justierungsparameterwerten eines Justierungsparametersatzes für ein Blattlastmesssystem dazu ausgebildet ist, Justierungsparameterwerte des zweiten Justierungsparametersatzes für das zweite Blattlastmesssystem derart anzupassen, dass die zweite Abweichung kleiner gleich einem Schwellwert ist.

11. Vorrichtung nach einem der Ansprüche 9 bis 10, ferner aufweisend eine Pitch-Winkel-Verwendungs- und/oder Einstelleinheit, um einen Pitch-Winkel zu verwenden und/oder einen definierten Pitch-Winkel, insbesondere unterschiedliche Pitch-Winkel, einzustellen.

12. Vorrichtung nach einem der Ansprüche 9 bis 11, ferner aufweisend eine Einheit zum Verwerfen einer Beschleunigung, die dazu ausgebildet ist, eine Windgeschwindigkeit mit einem Windgeschwindigkeits-Schwellwert zu vergleichen und die erste gemessene Beschleunigung auszuwählen, wenn die Windgeschwindigkeit kleiner als ein Windgeschwindigkeits-Schwellwert ist und die erste gemessene Beschleunigung zu verwerfen, wenn die Windgeschwindigkeit größer als ein Windgeschwindigkeits-Schwellwert ist.

13. Windkraftanlage umfassend
einen Rotor mit einer Nabe und
einem Rotorblatt, das sich radial von der Nabe erstreck, wobei die Anzahl an Rotorblättern zumindest ein erstes Rotorblatt umfasst, **dadurch gekennzeichnet, dass** die Windkraftanlage mit einer Vorrichtung nach einem der Ansprüche 9 bis 12 versehen ist.

14. Computerlesbares Speichermedium, welches Instruktionen enthält, die bewirken, dass die Vorrichtung nach einem der Ansprüche 9 bis 12 die Verfahrensschritte gemäß einem der Ansprüche 1 bis 8 ausführt.

## Claims

1. A computer-implemented method for adjustment of a first blade load measurement system having at least one strain sensor on a first rotor blade of a wind turbine, having the following steps:
a) measuring a first acceleration with a first acceleration sensor;
b) determining a first reference bending moment and/or a first reference axial force based on the first measured acceleration;
c) determining a first measured bending moment and/or a first measured axial force based on measured values from the at least one strain sensor of the first blade load measurement system and a first adjustment parameter set with first initial adjustment parameter values associated with the first blade load measurement system;
d) determining a first deviation of the first reference bending moment and/or the first reference axial force from the first measured bending moment and/or the first measured axial force;
e) adapting the adjustment parameter values of the first adjustment parameter set for the first blade load measurement system such that the first deviation is less than or equal to a threshold value.

2. The computer-implemented method according to claim 1, **characterised in that** the method comprises adjusting a second blade load measurement system having at least one strain sensor on a second rotor blade, having the following steps:
a) determining a second acceleration associated with the second rotor blade based on the first measured acceleration taking into account an angular offset between the first and a second rotor blade;
b) determining a second reference bending moment and/or a second reference axial force based on the second acceleration;
c) determining a second measured bending moment and/or a second measured axial force based on measured values from the at least one strain sensor of the second blade load measurement system and a second adjustment parameter set with second initial adjustment parameters associated with the second blade load measurement system;
d) determining a second deviation of the second reference bending moment and/or the second reference axial force from the second measured bending moment and/or the second measured axial force;
e) adapting the adjustment parameter values of the second adjustment parameter set for the second blade load measurement system such that the second deviation is less than or equal to a threshold value.

3. The computer-implemented method according to claim 1 or 2, **characterised in that** steps a) to d) are performed repeatedly, in particular for at least 50, more particularly at least 100, more particularly at least 1000, more particularly at least 10000 repetitions, with different pitch angles and/or different accelerations being detected at each repetition, and afterwards in step e), the adjustment parameter values are adapted such that the first or second deviations detected in step d) are less than or equal to a threshold value.

4. The computer-implemented method according to any one of the preceding claims, **characterised in that**, prior to step a), a pitch angle is applied and/or a defined pitch angle, in particular different pitch angles, is set.

5. The computer-implemented method according to any one of the preceding claims, **characterised in that** the first measured acceleration is rejected if a wind speed exceeds a wind speed threshold value.

6. The computer-implemented method according to any one of the preceding claims, **characterised in that** the first acceleration sensor measures accelerations in at least one, in particular two, more particularly three spatial directions and/or is formed by an inertial measurement unit, and/or **in that** an acceleration sensor, preferably two, more preferably three acceleration sensors, are arranged in the hub of the wind turbine.

7. The computer-implemented method according to any one of the preceding claims, **characterised in that** the at least one strain sensor of the first or second blade load measurement system is arranged on the first or second rotor blade in a radial range of no more than 50 %, preferably no more than 30 %, of the length of the rotor blade starting from the blade flange.

8. The computer-implemented method according to any one of the preceding claims, **characterised in that** the adjustment of the first and/or second blade load measurement system on the first and/or second rotor blade is executed by a computing device on site at the wind turbine and/or by a remote computing device.

9. An apparatus for adjustment of a first blade load measurement system having at least one strain sensor on a first rotor blade of a wind turbine, having:
- a unit for measuring an acceleration, configured to measure a first acceleration with a first acceleration sensor;
- a unit for determining a bending moment and/or an axial force, configured to determine a first reference bending moment and/or a first reference axial force based on the first measured acceleration and a first measured bending moment and/or a first measured axial force based on measured values from the at least one strain sensor of the first blade load measurement system and a first adjustment parameter set with first initial adjustment parameter values associated with the first blade load measurement system;
- a unit for determining a deviation of bending moments and axial forces, configured to determine a first deviation of the first reference bending moment and/or the first reference axial force from the first measured bending moment and/or the first measured axial force;
- a unit for adapting adjustment parameter values of an adjustment parameter set for a blade load measurement system, configured to adapt adjustment parameter values of the first adjustment parameter set for the first blade load measurement system such that the first deviation is less than or equal to a threshold value.

10. The apparatus according to claim 9, **characterised in that** the apparatus is suitable for adjustment of a second blade load measurement system having at least one strain sensor on a second rotor blade of a wind turbine, wherein
- the unit for measuring an acceleration is configured to determine a second acceleration based on the first measured acceleration and taking into account an angular offset between the first and second rotor blades;
- wherein the unit for determining a bending moment and/or an axial force is configured to determine a second reference bending moment and/or a second reference axial force based on the second acceleration and a second measured bending moment and/or a second measured axial force based on measured values from the at least one strain sensor of the second blade load measurement system and a second adjustment parameter set with second initial adjustment parameter values associated with the second blade load measurement system;
- wherein the unit for determining a deviation of bending moments and axial forces is configured to determine a second deviation of the second reference bending moment and/or the second reference axial force from the second measured bending moment and/or the second measured axial force;
- wherein the unit for adapting adjustment parameter values of an adjustment parameter set for a blade load measurement system is configured to adapt adjustment parameter values of the second adjustment parameter set for the second blade load measurement system such that the second deviation is less than or equal to a threshold value.

11. The apparatus according to any one of claims 9 to 10, further having a pitch angle application and/or setting unit to apply a pitch angle and/or to set a defined pitch angle, in particular different pitch angles.

12. The apparatus according to any one of claims 9 to 11, further having a unit for rejecting an acceleration, configured to compare a wind speed to a wind speed threshold value and to select the first measured acceleration if the wind speed is less than a wind speed threshold value, and to reject the first measured acceleration if the wind speed is greater than a wind speed threshold value.

13. A wind turbine, comprising a rotor with a hub and a rotor blade, extending radially from the hub, wherein the number of rotor blades comprises at least a first rotor blade, **characterised in that** the wind turbine is provided with an apparatus according to any one of claims 9 to 12.

14. A computer-readable storage medium, containing instructions which cause the apparatus according to any one of claims 9 to 12 to execute the method steps according to any one of claims 1 to 8.

## Revendications

1. Procédé mis en œuvre par ordinateur de réglage d'un premier système de mesure de la charge d'une pale comportant au moins un capteur de déformation sur une première pale de rotor d'une éolienne, comprenant les étapes suivantes :
a) la mesure d'une accélération initiale à l'aide d'un premier capteur d'accélération ;
b) la détermination d'un premier moment de flexion de référence et/ou d'une première force axiale de référence à partir de la première accélération mesurée ;
c) la détermination d'un premier moment de flexion mesuré et/ou d'une première force axiale mesurée à partir des valeurs mesurées de l'au moins un capteur de déformation du premier système de mesure de charge de pale et d'un premier ensemble de paramètres de réglage attribués au premier système de mesure de charge de pale avec des valeurs initiales de paramètres de réglage ;
d) la détermination d'un premier écart du premier moment de flexion de référence et/ou de la première force axiale de référence par rapport au premier moment de flexion mesuré et/ou à la première force axiale mesurée ;
e) l'ajustement des valeurs des paramètres d'ajustement du premier ensemble de paramètres d'ajustement pour le premier système de mesure de charge de pale de sorte que le premier écart soit inférieur ou égal à une valeur seuil.

2. Procédé mis en œuvre par ordinateur selon la revendication 1, **caractérisé en ce que** le procédé comprend le réglage d'un deuxième système de mesure de charge de pale avec au moins un capteur de déformation sur une deuxième pale de rotor, comprenant les étapes suivantes :
a) la détermination d'une deuxième accélération attribuée à la deuxième pale de rotor en fonction de la première accélération mesurée, en tenant compte d'un décalage angulaire entre la première et la deuxième pale de rotor ;
b) la détermination d'un deuxième moment de flexion de référence et/ou d'une deuxième force axiale de référence sur la base de la deuxième accélération ;
c) la détermination d'un deuxième moment de flexion mesuré et/ou d'une deuxième force axiale mesurée sur la base des valeurs mesurées provenant de l'au moins un capteur de déformation du deuxième système de mesure de charge de pale et d'un deuxième ensemble de paramètres de réglage attribués au deuxième système de mesure de charge de pale avec des deuxièmes valeurs initiales de paramètres de réglage ;
d) la détermination d'un deuxième écart du deuxième moment de flexion de référence et/ou de la deuxième force axiale de référence par rapport au deuxième moment de flexion mesuré et/ou à la deuxième force axiale mesurée ;
e) l'ajustement des valeurs des paramètres d'ajustement du deuxième ensemble de paramètres d'ajustement pour le deuxième système de mesure de charge de pale de sorte que le deuxième écart soit inférieur ou égal à une valeur seuil.

3. Procédé mis en œuvre par ordinateur selon la revendication 1 ou 2, **caractérisé en ce que** les étapes a) à d) sont exécutées de manière répétée, notamment au moins 50, en particulier au moins 100, en particulier au moins 1000, en particulier au moins 10000 fois, dans lequel différents angles de tangage et/ou différentes accélérations sont enregistrés à chaque répétition, puis à l'étape e), les valeurs des paramètres d'ajustement sont ajustées de sorte que les premier et deuxième écarts enregistrés à l'étape d) soient inférieurs ou égaux à une valeur seuil.

4. Procédé mis en œuvre par ordinateur selon l'une quelconque des revendications précédentes, **caractérisé en ce qu'**avant l'étape a), un angle de tangage est utilisé et/ou un angle de tangage défini, en particulier différents angles de tangage, sont réglés.

5. Procédé mis en œuvre par ordinateur selon l'une quelconque des revendications précédentes, **caractérisé en ce que** la première accélération mesurée est écartée si la vitesse du vent dépasse un seuil de vitesse du vent.

6. Procédé mis en œuvre par ordinateur selon l'une quelconque des revendications précédentes, **caractérisé en ce que** le premier capteur d'accélération mesure les accélérations dans au moins une, en particulier deux, et plus particulièrement trois directions spatiales et/ou est conçu par une centrale inertielle et/ou qu'un capteur d'accélération, de préférence deux, et plus particulièrement trois capteurs d'accélération, sont disposés dans le moyeu de l'éolienne.

7. Procédé mis en œuvre par ordinateur selon l'une quelconque des revendications précédentes, **caractérisé en ce que** l'au moins un capteur de déformation du premier ou du deuxième système de mesure de charge de pale est disposé sur la première ou la deuxième pale de rotor dans une zone radiale d'au plus 50 %, de préférence d'au plus 30 %, de la longueur de la pale de rotor à partir de la bride de pale.

8. Procédé mis en œuvre par ordinateur selon l'une quelconque des revendications précédentes, **caractérisé en ce que** le réglage du premier et/ou du deuxième système de mesure de charge de la première et/ou de la deuxième pale de rotor est effectué par un dispositif informatique sur site à l'éolienne et/ou par un dispositif informatique distant.

9. Dispositif de réglage d'un premier système de mesure de la charge d'une pale comportant au moins un capteur de déformation sur une première pale de rotor d'une éolienne, comprenant les éléments suivants :
- une unité de mesure de l'accélération, conçue pour mesurer une première accélération à l'aide d'un premier capteur d'accélération ;
- une unité de détermination d'un moment de flexion et/ou d'une force axiale, configurée pour déterminer un premier moment de flexion de référence et/ou une première force axiale de référence à partir de la première accélération mesurée et pour déterminer un premier moment de flexion mesuré et/ou une première force axiale mesurée à partir des valeurs mesurées de l'au moins un capteur de déformation du premier système de mesure de charge de pale et d'un premier ensemble de paramètres de réglage associés au premier système de mesure de la charge de pale avec des valeurs initiales de paramètres de réglage ;
- une unité permettant de déterminer un écart du moment de flexion et de la force axiale, conçue pour déterminer un premier écart du premier moment de flexion de référence et/ou de la première force axiale de référence par rapport au premier moment de flexion mesuré et/ou à la première force axiale mesurée ;
- une unité de réglage des valeurs des paramètres de réglage d'un ensemble de paramètres de réglage pour un système de mesure de charge de pale, conçue pour ajuster les valeurs des paramètres de réglage du premier ensemble de paramètres de réglage du premier système de mesure de charge de pale de sorte que le premier écart soit inférieur ou égal à une valeur seuil.

10. Dispositif selon la revendication 9, **caractérisé en ce qu'**il est adapté au réglage d'un deuxième système de mesure de la charge d'une pale comportant au moins un capteur de déformation sur une deuxième pale de rotor d'une éolienne, dans lequel
- l'unité de mesure d'une accélération est conçue pour déterminer une deuxième accélération à partir de la première accélération mesurée et en tenant compte d'un décalage angulaire entre la première et la deuxième pale de rotor ;
- dans lequel l'unité de détermination d'un moment de flexion et/ou d'une force axiale est configurée pour déterminer un deuxième moment de flexion de référence et/ou une deuxième force axiale de référence sur la base de la deuxième accélération et pour déterminer un deuxième moment de flexion mesuré et/ou une deuxième force axiale mesurée sur la base des mesures de l'au moins un capteur de déformation du deuxième système de mesure de charge de pale et d'un deuxième ensemble de paramètres de réglage associés au deuxième système de mesure de charge de pale avec des deuxièmes valeurs initiales de paramètres de réglage ;
- dans lequel l'unité de détermination d'un écart du moment de flexion et de la force axiale est conçue pour déterminer un deuxième écart du deuxième moment de flexion de référence et/ou de la deuxième force axiale de référence par rapport au deuxième moment de flexion mesuré et/ou à la deuxième force axiale mesurée ;
- dans lequel l'unité de réglage des valeurs des paramètres de réglage d'un ensemble de paramètres de réglage pour un système de mesure de charge de pale est conçue pour régler les valeurs des paramètres de réglage du deuxième ensemble de paramètres de réglage pour le deuxième système de mesure de charge de pale sorte que le deuxième écart soit inférieur ou égal à une valeur seuil.

11. Dispositif selon l'une quelconque des revendications 9 à 10, comprenant en outre une unité d'utilisation et/ou de réglage d'angle de tangage pour utiliser un angle de tangage et/ou régler un angle de tangage défini, en particulier différents angles de tangage.

12. Dispositif selon l'une quelconque des revendications 9 à 11, comprenant en outre une unité de rejet d'une accélération, configurée pour comparer une vitesse du vent à un seuil de vitesse du vent et pour sélectionner la première accélération mesurée si la vitesse du vent est inférieure à un seuil de vitesse du vent et pour rejeter la première accélération mesurée si la vitesse du vent est supérieure à un seuil de vitesse du vent.

13. Éolienne comprenant un rotor muni d'un moyeu et d'une pale s'étendant radialement à partir du moyeu, le nombre de pales incluant au moins une première pale, **caractérisée en ce que** l'éolienne est équipée d'un dispositif selon l'une quelconque des revendications 9 à 12.

14. Support de stockage lisible par ordinateur contenant des instructions qui permettent au dispositif, selon l'une quelconque des revendications 9 à 12, de réaliser les étapes du procédé selon l'une quelconque des revendications 1 à 8.
